Europäisches Patentamt

**(19)** European Patent Office

Office européen des brevets

**(11)** Publication number : **0 314 645 B1**

**(12)** EUROPEAN PATENT SPECIFICATION

**(45)** Date of publication of patent specification :
20.05.92 Bulletin 92/21

**(51)** Int. Cl.⁵ : **B62D 1/22**, B62D 5/093

**(21)** Application number : 88830446.6

**(22)** Date of filing : 25.10.88

**(54)** A hydraulic control circuit for steering the front wheels of a tractor with a reversible driving position.

**(30)** Priority : 26.10.87 IT 6789887

**(43)** Date of publication of application :
03.05.89 Bulletin 89/18

**(45)** Publication of the grant of the patent :
20.05.92 Bulletin 92/21

**(84)** Designated Contracting States :
AT CH DE ES FR GB LI

**(56)** References cited :
EP-A- 0 041 421
FR-A- 2 146 930
US-A- 4 372 341

**(73)** Proprietor : **SAME S.p.A.**
Viale F. Cassani, 14
I-24047 Treviglio Bergamo (IT)

**(72)** Inventor : **Bisleri, Secondo**
c/o Same S.p.A. Viale F. Cassani, 14
I-24047 Treviglio (Bergamo) (IT)

**(74)** Representative : **Buzzi, Franco et al**
c/o Jacobacci-Casetta & Perani S.p.A. Via
Alfieri, 17
I-10121 Torino (IT)

## Description

The present invention is directed to reversible hydraulic steering systems for tractors, of the type generally known from US-A-4372341.

In particular, the invention relates to a hydraulic control circuit for steering the front wheels of a tractor in two modes of operation in which the sense of steering in one of said modes is reversed, and a single steering wheel which is movable from one driving position to the other.

The object of the present invention is to produce a hydraulic circuit of the type defined above which makes it possible to change from normal driving to driving backwards without the need to operate valves or switches or, at any rate, without the need for selection operations.

According to the invention, this object is achieved by means of a hydraulic steering circuit of the type indicated above, characterised in that it includes two hydraulic steering units, a front unit and a rear unit respectively, which are interconnected in series and operable selectively, without the need for switching devices.

The two hydraulic steering units conveniently each have, in known manner, an inlet connected to a hydraulic supply, a discharge outlet, and two steering outlets, right-hand and left-hand, connected to respective hydraulic actuators associated with the front wheels of the tractor; the discharge outlet of the front hydraulic steering unit being connected to the inlet of the rear hydraulic steering unit, and the right-hand and left-hand steering outlets of the front hydraulic steering unit being connected to the left-hand and right-hand steering outlets respectively of the rear hydraulic steering unit.

If the two hydraulic steering units are not provided with load-sensing devices, the discharge outlet of the front hydraulic steering unit is normally connected to the discharge outlet of the rear hydraulic steering unit through a bypass line in which a calibrated one-way valve is inserted for enabling the front hydraulic steering unit to be operated when the tractor engine is switched off by means of a hydraulic supply from the tractor gearbox.

If the hydraulic steering units are provided with load-sensing devices, this one-way valve is omitted.

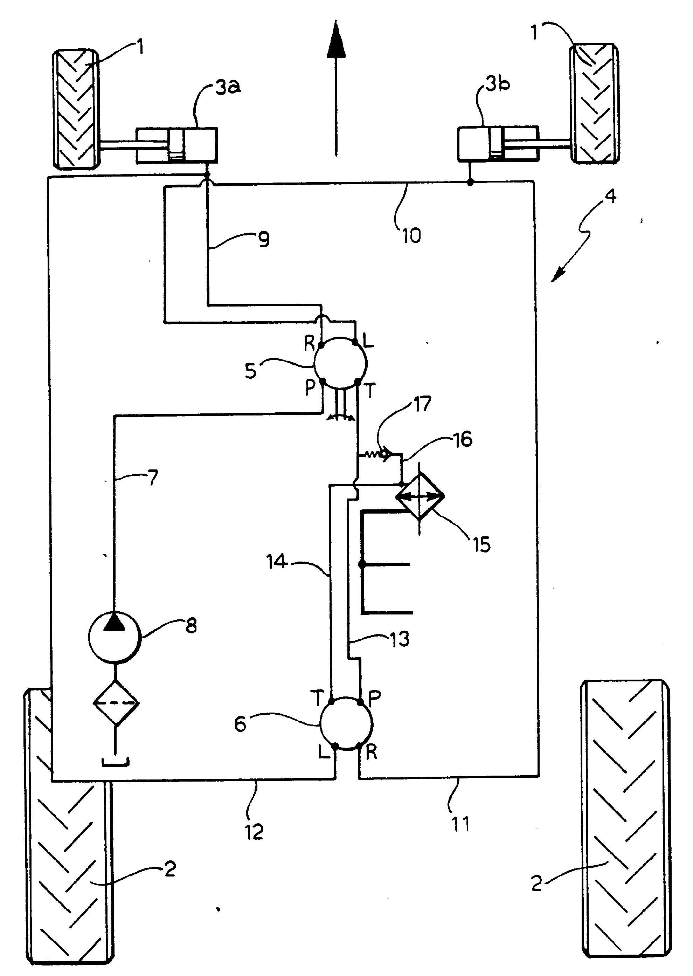

The invention will now be described in detail with reference to the appended drawing, provided purely by way of non-limiting example, which shows schematically a hydraulic circuit for steering a tractor with a reversible driving position.

With reference to the drawing, the front steerable wheels of a tractor are schematically indicated 1 and the rear wheels are indicated 2. Two linear hydraulic actuators 3a, 3b are associated with the front wheels 1 and steer them through a hydraulic circuit, generally indicated 4.

The circuit 4 includes two hydraulic steering units, a front unit and a rear unit, schematically indicated 5 and 6, respectively.

The two hydraulic steering units 5 and 6 are of generally known type and will not therefore be described in detail. They may, for example, be of the type produced and marketed by DANFOSS under the mark OSPC/ON. In this case, the only modification necessary for the invention consists of the locking of the anticavitation valves of the hydraulic steering unit 5 in their closed positions.

Alternatively, the two hydraulic steering units 5 and 6 could be provided with load-sensing devices and, for example, be of the type produced and marketed by DANFOSS under the mark OSPC ON ELS.

Each hydraulic steering unit 5, 6 has a supply inlet, indicated P, a discharge outlet T and two steering outlets, a right-hand outlet and a left-hand outlet, indicated R and L respectively.

The supply inlet P of the front hydraulic steering unit 5 is connected through a line 7 to a hydraulic pump 8 which also provides for the lubrication of the tractor gearbox. The right-hand steering outlet R and the left-hand steering outlet L of the front hydraulic steering unit 5 are connected through lines 9 and 10 respectively to the actuator 3a and to the actuator 3b, whilst the discharge outlet T is connected to the supply inlet P of the rear hydraulic steering unit 6 through a line 13.

The right-hand steering outlet R and the left-hand steering outlet L of the rear hydraulic steering unit 6 are in turn connected through lines 11 and 12 respectively to the line 10 which connects the steering outlet L of the front hydraulic steering unit 5 to the actuator 3b and to the line 9 which connects the right-hand steering outlet R of the front hydraulic steering unit 5 to the actuator 3a.

The discharge outlet T of the rear hydraulic steering unit 6 supplies the tractor gearbox through a line 14 and a heat exchanger 15.

If the hydraulic steering units 5 and 6 are not provided with load-sensing devices, the line 13 and the line 14 are interconnected by means of a bypass line 16 including a one-way valve 17 with a calibration pressure of the order of 0.1 bars. During steering operations with the engine switched off, the front hydraulic steering unit 5 operates by taking oil from the gearbox through the one-way valve 17.

If the hydraulic steering units 5 and 6 are provided with load sensing devices, the use of the one-way valve 17 is unnecessary.

By virtue of the arrangement described above, and particularly in view of the connection of the two hydraulic steering units 5 and 6 in series, it is possible to change from normal driving of the tractor to backwards driving without the need to operate valve or switching devices and, at any rate, without the need for any preliminary selection operations.

**Claims**

1. A hydraulic control circuit (4) for steering the front wheels (1) of a tractor in two modes of operation in which the sense of steering in one of said modes is reversed, with a single steering wheel which is movable from one driving position to the other, characterispd in that it includes two hydraulic steering units, a front unit (5) and a rear unit (6) respectively, interconnected in series and operable selectively, without the need for switching devices

2. A hydraulic circuit according to Claim 1, characterised in that the two hydraulic steering units (5, 6) each have, in known manner, an inlet (P) connected to a hydraulic supply, a discharge outlet (T), and two steering outlets (R, L), right-hand and left-hand, connected to respective hydraulic actuators (3a, 3b) associated with the front wheels (1) of the tractor; the discharge outlet (T) of the front hydraulic steering unit (5) being connected to supply the inlet (P) of the rear hydraulic steering unit (6) and the right-hand and left-hand steering outlets (R, L) of the front hydraulic steering unit (5) being connected to the left-hand and right-hand steering outlets (L, R) respectively of the rear hydraulic steering unit (6).

3. A hydraulic circuit according to Claim 2, characterised in that the discharge outlets (T) of the front hydraulic steering unit (5) and the rear hydraulic steering unit (6) are interconnected through a bypass line (16) in which a calibrated one-way valve (17) may be inserted.

**Patentansprüche**

1. Hydraulische Steuerschaltung (4) zum Lenken der Vorderräder (1) eines Traktors in zwei Betriebsarten, wobei die Lenkrichtung in einer Betriebsart umgekehrt wird, mit einem einzigen Lenkrad, das von einer Fahrerstellung in die andere bewegt werden kann, dadurch gekennzeichnet, daß die hydraulische Steuerschaltung zwei hydraulische Lenkeinheiten, eine vordere Einheit (5) bzw. eine hintere Einheit (6), aufweist, die in Serie geschaltet sind und wahlweise in Betrieb gesetzt werden können, ohne daß Umschalteinrichtungen notwendig sind.

2. Hydraulische Schaltung gemäß Anspruch 1, dadurch gekennzeichnet, daß jede der beiden hydraulischen Lenkeinheiten (5, 6) auf bekannte Art einen Einlaß (P), der mit einem Hydraulikvorrat verbunden ist, einen Auslaß (T) sowie zwei Lenkauslässe (R, L), einen rechten und einen linken, besitzt, die mit entsprechenden hydraulischen Stellgliedern (3a, 3b) verbunden sind, die den Vorderrädern (1) des Traktors zugeordnet sind; wobei der Auslaß (T) der vorderen hydraulischen Lenkeinheit (5) angeschlossen ist, um den Einlaß (P) der hinteren hydraulischen Lenkeinheit (6) anzuspeisen, und wobei der rechte und linke Lenkauslaß (R, L) der vorderen hydraulischen Lenkeinheit (5) mit dem linken bzw. rechten Lenkauslaß (L, R) der hinteren hydraulischen Lenkeinheit (6) verbunden ist.

3. Hydraulische Schaltung gemäß Anspruch 2, dadurch gekennzeichnet, daß die Auslässe (T) der vorderen hydraulischen Lenkeinheit (5) und der hinteren hydraulischen Lenkeinheit (6) über eine Umgehungsleitung (16) miteinander verbunden sind, in die ein geeichtes Einwegventil (17) eingesetzt werden kann.

**Revendications**

1. Circuit hydraulique (4) de commande pour la direction des roues avant (1) d'un tracteur dans deux modes de fonctionnement, dans lequel le sens de la direction est inversé dans un des dits modes, comportant un volant de direction unique qui peut être déplacé d'une position de conduite à l'autre, caractérisé en ce que qu'il comprend deux ensembles hydrauliques de direction, soit respectivement un ensemble (5) de direction avant et un ensemble (6) de direction arrière, qui sont reliés l'un à l'autre en série et peuvent être mis en action de façon sélective, sans faire appel à des dispositifs commutateurs.

2. Circuit hydraulique selon la revendication 1, caractérisé en ce que les deux ensembles (5, 6) de direction hydraulique comportent chacun, de façon connue, une entrée (P) raccordée à un dispositif d'alimentation hydraulique, une sortie de décharge (T) et deux sorties (R, L) de direction droite et gauche raccordées respectivement à des organes (3a, 3b) de commande hydraulique associés aux roues avant (1) du tracteur; la sortie de décharge (T) de l'ensemble (5) de direction hydraulique avant étant branchée de manière à alimenter l'entrée (P) de l'ensemble (6) de direction hydraulique arrière, et les sorties de direction droite et gauche (R, L) de l'ensemble (5) de direction hydraulique avant étant branchées respectivement aux sorties de direction gauche et droite (L, R) de l'ensemble (6) de direction hydraulique arrière.

3. Circuit hydraulique selon la revendication 2, caractérisé en ce que les sorties de décharge (T) de l'ensemble (5) de direction hydraulique avant et de l'ensemble (6) de direction hydraulique arrière sont raccordées l'une à l'autre par l'intermédiaire d'une conduite (16) de dérivation, dans laquelle un clapet calibré (17) de non retour peut être installé.